# DEMANDE DE BREVET EUROPEEN

(11) **EP 1 061 307 A1**
(43) Date de publication de la demande: **20.12.2000**
(21) Numéro de dépôt: 00400998.1
(22) Date de dépôt: 11.04.2000
(51) Int. Cl.: F17C 1/08, B65D 88/06

(54) **Réservoir résistant à la pression constituée de profilés**

(30) Priorité: 15.06.1999 FR 9907532
(71) Demandeur: Société Metallurgique Liotard Frères, Société Anonyme, 75008 Paris (FR)
(72) Inventeur: Dailloux, Alain, 37230 Fondettes (FR)
(74) Mandataire: Eidelsberg, Victor Albert

(57) **Abrégé**

Ce réservoir est constitué d'un profilé (1) en forme de C fermé par au moins un profilé intermédiaire en forme de U dont les branches (4, 5) sont convexes et par un second profilé (11) latéral en forme de C ouvert.

## Description

La présente invention se rapporte aux réservoirs résistant à la pression et, plus particulièrement, à ceux destinés à contenir du gaz de pétrole liquéfié et à être montés sur un véhicule automobile.

Ces réservoirs sont généralement métalliques de manière à résister à la pression et sont relativement difficiles à fabriquer, d'autant qu'ils doivent s'adapter à la place dont on dispose.

Au EP-A-0 068 473, on décrit des réservoirs ayant soit seulement deux profilés, sans possibilité d'en ajouter un troisième (figure 4), soit trois profilés, sans possibilité d'en rajouter un quatrième et surtout dont les parois intermédiaires incurvées (figure 5) donnent une résistance à la pression médiocre et difficile à maîtriser. Au US-A-4 964 056, les parois entre les profilés sont conformées en Y, ce qui n'est pas réalisable en tôle d'acier d'une manière simple.

L'invention se donne pour but de fabriquer des réservoirs pouvant avoir des capacités différentes, en utilisant aussi peu de pièces que possible, quelle que soit la variation de capacité d'un réservoir à l'autre, tout en conservant l'aptitude à résister à la pression.

Un réservoir suivant l'invention est défini à la revendication 1.

Le réservoir est constitué uniquement de trois types de profilés, respectivement en forme de C fermé, en forme de C ouvert et en forme de U. Ces profilés sont ainsi très faciles à fabriquer. En assemblant deux profilés en forme de C à un plus ou moins grand nombre de profilés en forme de U, on peut faire varier la capacité du réservoir et l'adapter à la place dont on dispose, tout en ayant toujours seulement trois types de profilés pour sa fabrication. Les parties correspondant aux hampes droites, parallèles à la direction longitudinale ou génératrice commune des profilés, sont faciles à fabriquer et assurent, à la différence de parties courbées, une bonne résistance à la pression et cette forme permet de bien maîtriser à la fabrication la pression à laquelle le réservoir devra résister.

Pour faciliter le soudage, les extrémités des branches du profilé intermédiaire peuvent avoir des retours de soudage s'étendant parallèlement à la hampe (revendication 2). Pour la même raison, les extrémités du second profilé latéral peuvent avoir des retours de soudage s'étendant parallèlement à l'âme du U (revendication 3).

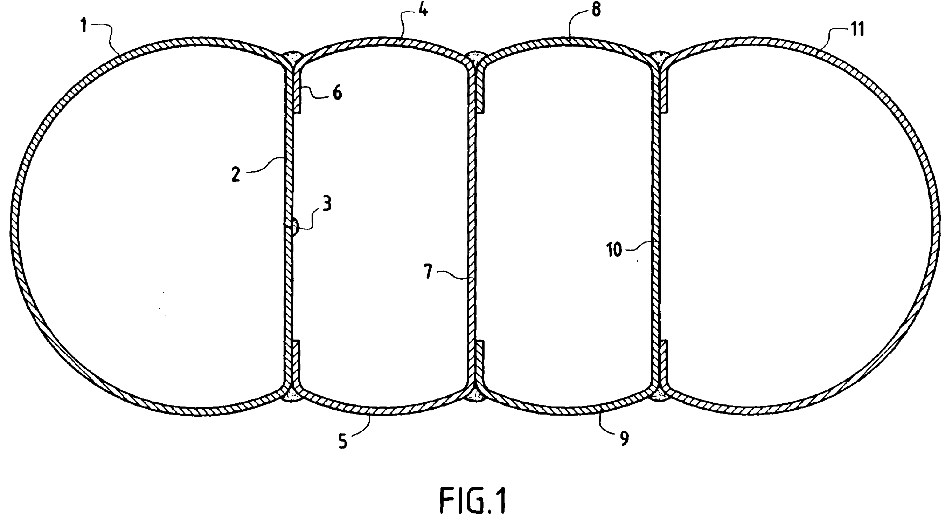

Au dessin annexé, donné uniquement à titre d'exemple : la figure 1 est une vue en coupe d'un réservoir suivant l'invention.

Le réservoir représenté à la figure 1 est constitué de profilés en acier de section transversale constante et d'épaisseur de paroi constante. Un premier profilé 1 latéral a une section transversale en forme de C fermée par une hampe 2 qui s'étend à l'intérieur du réservoir. La paroi correspondant à la hampe est génératrice des profilés. Le profilé est fermé par une soudure 3. Il est prévu un premier profilé intermédiaire de section transversale en forme de U dont les branches 4, 5 sont convexes. Les extrémités des branches 4, 5 sont soudées par des retours 6 aux extrémités de la hampe 2 du profilé 1. Le premier profilé intermédiaire a une âme 7 qui s'étend parallèlement à la paroi représentée en section transversale par la hampe 2. Un deuxième profilé intermédiaire est de forme identique au premier profilé intermédiaire. Les extrémités de ses branches 8, 9 sont soudées aux extrémités de l'âme 7 du premier profilé intermédiaire. Les soudures s'étendant le long de toutes les génératrices. Le deuxième profilé intermédiaire a une âme 10. Il est prévu enfin un second profilé 11 latéral en forme de C ouvert dont les extrémités sont soudées à nouveau par des retours aux extrémités de l'âme 10 du deuxième profilé intermédiaire.

En bout, les profilés sont fermés par des couvercles qui sont soudés sur leur bord. On prévoit dans le profilé une ouverture de remplissage qui n'est pas représentée. On peut aussi prévoir des ouvertures dans les parois correspondant à la hampe 2 et aux âmes 7, 10.

## Revendications

1. Réservoir résistant à la pression, qui comprend un premier profilé (1) latéral de section transversale en forme de C fermée par une hampe (2), un second profilé (11) latéral en forme de C ouvert et au moins un profilé intermédiaire, caractérisé en ce que le au moins un profilé intermédiaire a une section transversale en forme de U dont les branches (4, 5) sont convexes et dont les extrémités des branches sont soudées aux extrémités de la hampe (2) du premier profilé (1) ou aux extrémités de l'âme (7) du U d'un autre profilé intermédiaire, la paroi correspondant à la hampe (2) et à l'âme (7) s'étendant parallèlement aux génératrices des profilés, et les extrémités du second profilé (11) latéral sont soudées aux extrémités de l'âme (10) d'un profilé intermédiaire.

2. Réservoir suivant la revendication 1, caractérisé en ce que les extrémités des branches du profilé intermédiaire ont des retours (6) de soudage s'étendant parallèlement à la hampe (2).

3. Réservoir suivant la revendication 1, caractérisé en ce que les extrémités du second profilé (11) latéral ont des retours de soudage s'étendant parallèlement à l'âme (7) du U.
